# EUROPEAN PATENT APPLICATION

(11) **EP 2 517 602 A1**
(43) Date of publication of application: **31.10.2012**
(21) Application number: 10839358.8
(22) Date of filing: 20.12.2010
(51) Int. Cl.: A46B 15/00

(54) **BRUSH BODY AND TOOTHBRUSH**

(30) Priority: 22.12.2009 JP 2009290468
(71) Applicant: Panasonic Corporation, Kadoma-shi Osaka 571-8501 (JP)
(72) Inventor: UCHIDA, Satoshi, Osaka 540-6207 (JP); NAGAYAMA, Masayoshi, Osaka 540-6207 (JP)
(74) Representative: Appelt, Christian W.
(86) International application number: PCT/JP2010/072919
(87) International publication number: WO 2011/078128

(57) **Abstract**

A brush body (21) has bristle bundles (24) embedded in a head (23). Bristles (25) contained in the bristle bundle (24) each have a core (25x) which consists of a conductive member, and a sheath (25y) which consists of an insulating member and sheathes the core (25x). The core (25x) is exposed at the tip (25a) of the bristles (25) and functions as an electrode for passing current into the mouth. The embedding of the bristle bundles (24) in an electrically conductive base (26) contained in the head (23) electrically connects the core (25x) to the base (26).

## Description

The present invention relates to toothbrushes for oral care provided with an energizing function and to brush bodies used for such toothbrushes.

Various types of toothbrushes for oral care provided with an energizing function have been proposed in the prior art. For example, patent documents 1 to 3 listed below disclose toothbrushes that generate chlorine, which has a sterilization effect, from chloride ions included in an oral cavity fluid, such as saliva.

In detail, the toothbrush of patent document 1 includes a first electrode, which is arranged proximal to a brush head where bristles (brush bristles) are embedded, and a second electrode, which is arranged in a grip of the toothbrush. During use of the toothbrush, the first electrode, the second electrode, the human body, and the oral cavity fluid form an electric circuit that generates chlorine through electrolysis of the oral cavity fluid near the first electrode of the brush head.

The toothbrushes illustrated in patent documents 2 and 3 each include first and second electrodes that are both arranged in a brush head where bristles (brush bristles) are embedded. During use of the toothbrush, an electric circuit formed in the oral cavity between the first and second electrodes generates chlorine through electrolysis of the oral cavity near the first electrode of the brush head. Fig. 7 of patent document 1 discloses another example in which the bristles are partially used as electrodes. Paragraph 0033 of patent document 2 and paragraph 0041 of patent document 3 describe further examples in which the bristles are entirely used as electrodes.

Patent document 4 illustrates a toothbrush using parts of bristles as electrodes in the same manner as the structure shown in Fig. 7 of patent document 1. Each bristle has a double-layer structure including a conductive core and an insulative sheath. The electrodes of the bristles in patent document 4 detect plaque.

Patent document 5 discloses a toothbrush that energizes the oral cavity through a conductive body arranged in a brush head (distal portion of stem), which supports bristles, to perform sterilization and promote blood circulation in the gum.

Patent document 6 discloses an ion toothbrush including a conductive member partially exposed through a stem and having an electric effect that weakens the bonding of teeth surface and plaque to facilitate the removal of plaque.

Patent document 7 discloses an electronic toothbrush that supplies pulse current to bristles in order to draw fluorine ions into the teeth surface.
Patent Document 1: Japanese Laid-Open Patent Publication No. 6-90824
Patent Document 2: Japanese Laid-Open Patent Publication No. 2006-102095
Patent Document 3: Japanese Laid-Open Patent Publication No. 2006-180953
Patent Document 4: Japanese National Phase Laid-Open Patent Publication No. 2000-504605
Patent Document 5: Japanese Laid-Open Patent Publication No. 60-45362
Patent Document 6: Japanese Laid-Open Patent Publication No. 2001-309820
Patent Document 7: Japanese Laid-Open Patent Publication No. 2006-223369

In fine gaps formed in the oral cavity, such as periodontal pockets between the teeth and gum, bacteria easily breed. Thus, from the viewpoint of oral hygiene, concentrated oral care of such fine gaps in the oral cavity is effective during brushing with a normal toothbrush.

In a toothbrush including an electrode in the brush head such as in patent documents 1 to 3, the electrode may not be sufficiently immersed in oral cavity fluid, which forms part of the electric circuit, and the generation of chlorine may become insufficient. Further, the electrode of the brush head is separated from periodontal pockets. Thus, chlorine cannot be directly supplied to the periodontal pockets, and effective sterilization of the periodontal pockets cannot be performed. For the electrode to be sufficiently immersed in oral cavity fluid and be arranged proximal to periodontal pockets, it is preferable that the bristles be used as the electrode like patent document 6 and the further examples of patent documents 1 to 3.

For instance, in the further example of patent document 1, the bristle includes a conductive core. A distal end surface of the core functions as an electrode. This structure allows for limited electrolysis to be performed proximal to the distal portion of the bristle. Patent document 4 does not describe energizing for oral care, such as sterilization, but discloses a structure that uses a flat distal end surface of the core as an electrode.

However, in a toothbrush that includes a plurality of bristle bundles, it may be difficult to electrically connect the conductive core to the circuit substrate or the like in the grip of the toothbrush.

The present invention solves the above problem and provides a brush body and a tooth brush that facilitate electric connection of the electrode of the bristle and the circuit substrate.

One aspect of the present disclosure is a brush body including a plurality of bristle bundles on a brush head. The plurality of bristle bundles includes a bristle that includes a core, which is formed by a conductive member, and a sheath, which covers the core and is formed by an insulative member. The core is exposed from the sheath at a tip portion of the bristle to function as an electrode that energizes an oral cavity. The bristle bundles are embedded in a base, which is arranged in the brush head and formed by a conductive member, thereby electrically connecting the core to the base.

In one example, the base is arranged in the brush head and thereby covered by the insulative member.

In one example, the base is formed by a conductive elastic member.

In one example, the base is formed to press against a connection portion of the core in a state in which the bristle bundles are embedded.

In one example, the base is an assembly including a fastening portion, which fastens the bristle bundles, and a connection portion, which is electrically connected to the core.

In one example, the bristle bundle is fastened by ultrasonic welding to the fastening portion, and the fastening portion includes a welding piece, which is used for ultrasonic welding, and a peripheral wall, which surrounds the welding piece.

In one example, the sheath is formed from an insulative resin and defines a side surface of the bristle bundle. The welding piece of the fastening portion is welded to the sheath.

In one example, the sheath is formed from an insulative resin and defines a side surface of the bristle bundle. The welding piece of the fastening portion is an annular piece surrounding the side surface of the bristle bundle.

In one example, each of a plurality of bristles forming each of the bristle bundles includes the core and the sheath.

In one example, each of the bristles in selected ones of the bristle bundles includes the core and the sheath.

In one example, the bristle bundle is folded in a U-shaped manner to include a folding portion, and the core is exposed from the sheath at the folded portion and electrically connected to the base.

In one example, the core includes a distal projection, which functions as the electrode, and a basal projection, which is connected to the base; and the sheath covers a side surface of the core excluding a side surface of the distal projection and side surface of the basal projection in the core.

In one example, the electrode generates chlorine having a sterilization effect through electrolysis of oral cavity fluid that is proximal to the electrode.

A further aspect of the present disclosure is a toothbrush including the brush body of the first aspect and an energizing means for supplying the electrode of the bristle with current for local energizing.

One example of the toothbrush further includes an oscillation actuator that oscillates the brush head.

The present invention provides a brush body and a tooth brush that facilitate electric connection of the electrode of the bristle and the circuit substrate.
Fig. 1 is a schematic cross-sectional view showing the structure of a toothbrush in an embodiment;
Fig. 2 is a cross-sectional view showing a brush body of the toothbrush of Fig. 1;
Fig. 3 is a cross-sectional view showing a brush body in a further example;
Figs. 4A, 4B and 4C are cross-sectional views illustrating the structure and procedures for fixing bristles to the brush body of Fig. 3;
Fig. 5 is a cross-sectional view showing a brush body in a further example; and
Fig. 6 is a cross-sectional view showing a brush body in a further example.

One embodiment of the present invention will now be described with reference to the drawings.

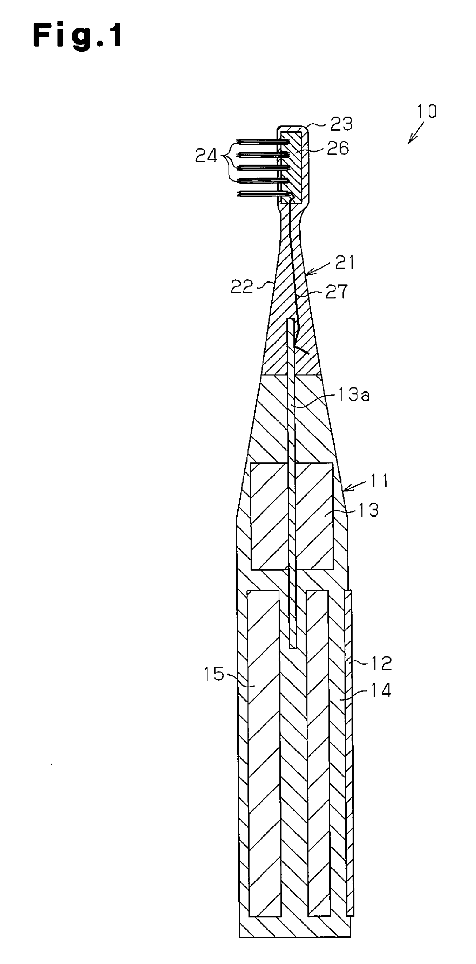

As shown in Fig. 1, a toothbrush 10 of the present invention includes a main body, or grip 11, which can be held by a user, and a brush body 21, which can be attached in a removable manner to a distal portion of the grip 11. The brush body 21 includes a brush stem 22 and a brush head 23. Bristle bundles 24 are embedded in the brush head 23. An oscillation actuator 13 in the grip 11 drives and oscillates the brush head 23 in an axial direction (longitudinal direction) to electrically perform brushing.

The grip 11 of the toothbrush 10 may be generally cylindrical so that it is easy to hold. The grip 11 has an outer surface including a grip electrode 12, which comes into contact with the user who is holding the grip 11, and a switch (not shown). The oscillation actuator 13, a battery 14, which is formed by a rechargeable battery or a primary battery, and a control circuit (circuit substrate) 15, which controls the supply of power from the battery 14 to the oscillation actuator 13 based on the operation of the switch, are arranged in the grip 11. The oscillation actuator 13 includes an output shaft 13a, which projects out of the distal portion of the grip 11. The brush body 21 (basal portion of the brush stem 22) is attached to cover the projected output shaft 13a.

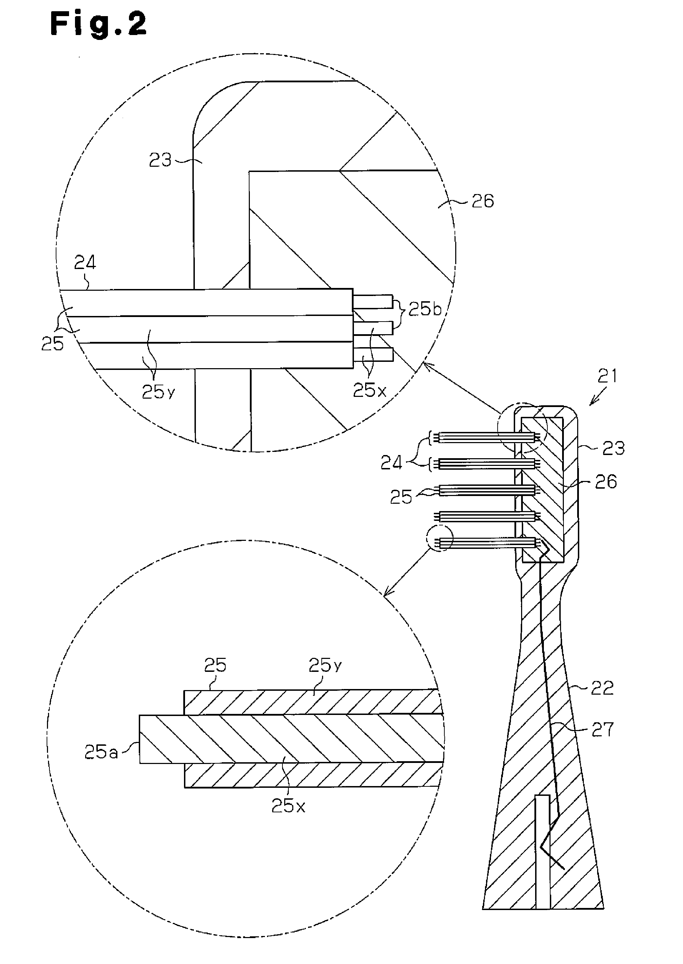

As shown in Fig. 2, the brush head 23 of the brush body 21 includes the bristle bundles 24 to remove plaque and the like. In one example, each bristle bundle 24 is formed by a plurality of filaments or bristles 25. Each bristle 25 has a double-layer structure including a core 25x, which is formed from a flexible conductive resin (for example, polyamide resin containing carbon or polybutylene terephthalate resin containing carbon), and a sheath 25y, which covers the core 25x and is formed from a flexible insulative resin (for example, polyamide resin that does not contain carbon or polybutylene terephthalate resin that does not contain carbon). The insulative resin forming the sheath 25y and the conductive resin forming the core 25x are both flexible materials (elastic materials). It is preferable that the resin forming the sheath 25y have a lower hardness than the resin forming the core 25x. Each bristle 25 includes a tip portion 25a, which is formed by the core 25x that projects from the sheath 25y. Each bristle 25 includes a basal portion 25b, which is formed by the core 25x that projects from the sheath 25y. The two ends of the core 25x projecting from the sheath 25y may be referred as a distal projection and a basal projection. In other words, the sheath 25y covers the side surface of the core 25x, excluding the side surface of the distal projection and the side surface of the basal projection of the core 25x. A predetermined number of bristles 25 are bundled into a bristle bundle 24 and embedded or fixed to the brush head 23.

A base 26 of a conductive resin is sealed or embedded in the brush head 23. The basal portions 25b in each bristle bundle 24 are all embedded in the base 26. Thus, there is no need to embed the bristles 25 one by one. The embedment of the bristle bundle 24 automatically connects the conductive core 25x and the base 26. The bristle bundles 24 may all be embedded at the same time in the base 26.

The base 26 may be arranged in the brush head 23 by fitting or two-color molding the base 26 to the brush head 23. In one example, the embedment of the bristle bundles 24 is performed after fitting or molding the base 26 to the brush head 23. In another example, the embedment of the bristle bundles 24 is performed before fitting or molding the base 26 to the brush head 23. The brush head 23 surrounding the base 26 is formed from an insulative resin. Accordingly, the conductive base 26 is covered by an insulative member and not exposed in the oral cavity. The base 26 is preferably formed from a conductive resin but may be another conductive member.

In a state in which the brush body 21 is attached to the grip 11, the conductive base 26 is electrically connected to the output shaft 13a of the oscillation actuator 13 by a connection terminal 27 that is arranged extending along the brush stem 22. This electrically connects the core 25x of each bristle 25 to the control circuit 15 via the base 26, the connection terminal 27, and the output shaft 13a. The grip electrode 12 of the grip 11 is also connected to the control circuit 15. Each core 25x functions as a first electrode, and the grip electrode 12 functions as a second electrode.

In the toothbrush 10 having such a structure, based on a switch operation performed by the user, the oscillation actuator 13 drives and oscillates the brush head 23. This improves the brushing capability and produces a massaging effect on the gum.

When using the toothbrush 10, the user holds the grip 11 in contact with the grip electrode 12. Further, the core 25x in the tip portion 25a of each bristle 25 comes into contact with oral cavity fluid, such as saliva. Accordingly, the control circuit 15, the grip electrode 12, the human body, the oral cavity fluid such as saliva, and the core 25x of the bristle 25 form an electric circuit. The control circuit 15 applies a DC voltage of, for example, 15 V. Based on the applied voltage, the tip portion 25a of the bristle 25 performs local energizing for oral care with the oral cavity fluid around the core 25x.

Bacteria easily breeds and plaque tends to remain in gaps in the oral cavity such as periodontal pockets between the teeth and gum or between teeth. The core 25x projects from the tip portion 25a of the bristle 25 and can thus enter gaps in the oral cavity. Thus, the brush body 21 can perform concentrated oral care at gaps in the oral cavity. The shape of the projection of the core 25x increases the energizing area and thus ensures sufficient energizing area for local energizing. Further, the conductive portion is only the core 25x at the tip portion 25a, and other parts of the brush body 21 excluding the core 25x at the tip portion 25a are covered by the insulative members. Thus, unnecessary current diffusion is prevented, and current can be concentrated at the core 25x of the tip portion 25a. The brush body 21 achieves these effects at the same time and can thus selectively perform local energizing for oral care in at least gaps in the oral cavity.

The core 25x at the tip portion 25a comes into direct contact with the teeth surface and the gum. Thus, the brush body 21 can separately and locally energize various portions in the oral cavity such as the teeth surface and the gum. Accordingly, the brush body 21 selectively obtains a desirable oral care effect for the user at portions in the oral cavity intended by the user. The oral care effect of the local energizing achieves one or more, preferably, all of sterilization, blood circulation promotion of the gum, the drawing of ions into the teeth surface, and the promotion of plaque removal.

An energizing means of the toothbrush 10 includes, in particular, the control circuit 15 and the core 25x.

The present embodiment has the characteristic advantages described below.
(1) In the present embodiment, the bristles 25 each include the core 25x, which is formed by a conductive member, and the sheath 25y, which is formed by an insulative member that covers the core 25x excluding the tip portion 25a. The core 25x projecting from the sheath 25y at the tip portion 25a of the bristle 25 functions as an electrode. That is, the tip portion 25a of the bristle 25 can enter gaps in the oral cavity, such as periodontal pockets where bacteria easily breeds, and the core 25x (electrode) exposed at the tip portion 25a can perform concentrated local energizing for oral care in gaps in the oral cavity. Further, the embedment of all of the bristle bundles 24 in the conductive base 26 in the brush head 23 electrically connects each core 25x of the bristle bundle 24 to the base 26. Just by embedding the bristle bundles 24 in the base 26, the cores 25x of the bristles 25 are electrically connected to the base 26 automatically. In this manner, the connection of the conductive base 26 and the cores 25x is simple. This facilitates the connection of the core 25x and the electric circuit (control circuit 15).
(2) In the present embodiment, the base 26 is enclosed in the insulative brush head 23. An insulative member covers the bristles 25 and the brush head 23 excluding the tip portions 25a of the bristles that perform local energizing for oral care. The exposure of conductive members is minimized. Thus, unnecessary current diffusion is prevented, and the efficiency of local energizing for oral care can be increased.
(3) In the present embodiment, the brush body 21 is applied to the toothbrush 10 that includes the oscillation actuator 13 with the bristles 25 and the base 26. This improves the brushing capability and produces a massaging effect on the gum by oscillating the brush head 23 with the oscillation actuator 13.
(4) In the present embodiment, the cores 25x are projected from the sheaths 25y at the tip portions 25a of the bristles 25. Thus, sufficient energizing area used for local energizing during oral care can be ensured. Further, the cores 25x of the tip portions 25a can perform local energizing by deeply entering gaps in the oral cavity such as periodontal pockets. The projection of the cores 25x is effective for sterilizing bacteria in gaps in the oral cavity.
(5) In the present embodiment, the sheaths 25y of the bristles 25 are formed by a flexible material having a lower hardness than the cores 25x. This softens contact of the bristles 25 with the gum or the like and lessens the stimuli received by the user.

The embodiment of the present invention may be modified as described below.

In the above embodiment, the bristles 25 (bristle bundles 24) embedded in the brush head 23 all have a double-layer structure of an electrode, or the core 25x, and the sheath 25y. Such bristles 25, which include electrodes, may be selectively used for only predetermined bristle bundles 24 or be selectively used as predetermined bristles 25 in a bristle bundle 24.

In the above embodiment, the tip portion 25a of the bristle 25 is formed by the core 25x, which projects in the form of a cylinder from the sheath 25y. However, the tip portion 25a is not limited to this shape. For example, the tip portion 25a may have a pointed shape or a semispherical shape. In this case, the core 25x projecting from the sheath 25y may itself have a pointed shape or a semispherical shape. In another example, the tip portion 25a may be formed so that the core 25x is flush with the sheath 25y and form a flat end surface. In a further example, the core 25x in the tip portion 25a may have a recessed shape.

In the above embodiment, each bristle 25 includes a single core 25x. However, each bristle 25 may include a plurality of cores 25x arranged next to each other.

In the above embodiment, the sheath 25y of the bristle 25 has a lower hardness than the core 25x but is not limited in such a manner. For example, the sheath 25y and the core 25x may have about the same hardness.

In the above embodiment, an insulative member covers the entire brush body 21 excluding the tip portions 25a of the bristles 25. However, an insulating member may cover part of the brush head 23 and the brush stem 22 to prevent unnecessary current diffusion. For example, an insulative member may partially cover a rear surface of the brush body 21 that is opposite to a front surface in which the bristle bundles 24 are embedded.

The base 26 is preferably a conductive elastic member. In this case, elastic force may be applied for the fastening and electric connection of the base 26 and the bristle bundles 24 (bristles 25). This facilitates and ensures the fastening and electric connection.

In the above embodiment, the base 26 does not have to be a single member and may be, for example, an assembly of two members.

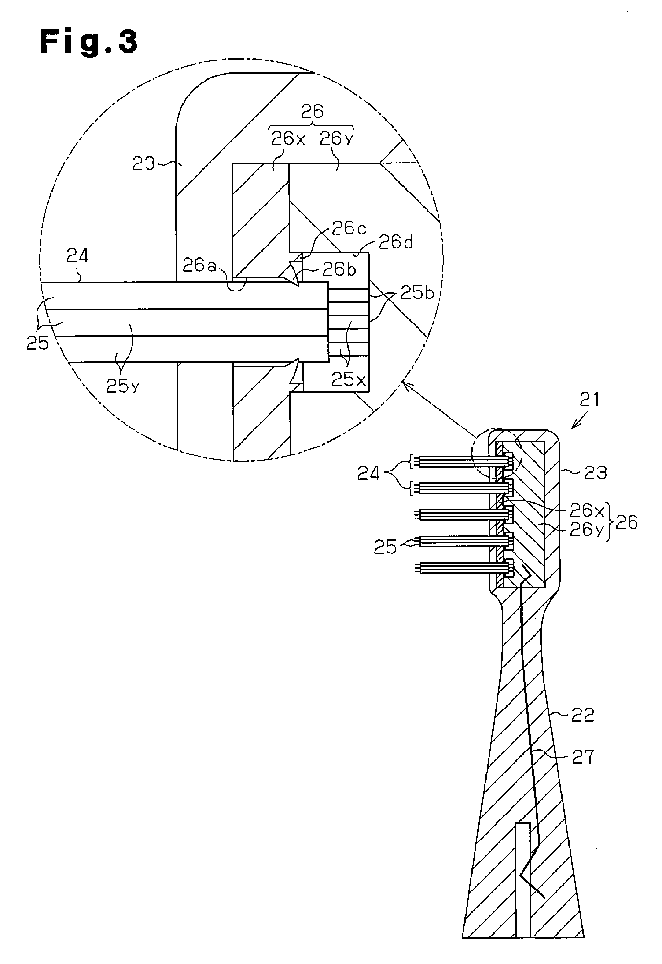

For example, the base 26 shown in Fig. 3 is an assembly including a fastening portion 26x, which fastens basal ends of the bristle bundles 24, and a connection portion 26y, which is electrically connected to the core 25x of each bristle 25. The fastening portion 26x is formed on the front side of the brush body 21, and the connection portion 26y is arranged on the rear side of the brush body 21. At least the connection portion 26y is formed from an insulative resin.

Insertion holes 26a extend through the fastening portion 26x at a plurality of locations to permit insertion of the bristle bundles 24. The fastening portion 26x includes, on the rim of each insertion hole 26a facing toward the connection portion 26y, a welding piece 26b, which is used for ultrasonic welding, and a peripheral wall 26c, which surrounds the welding piece 26b.

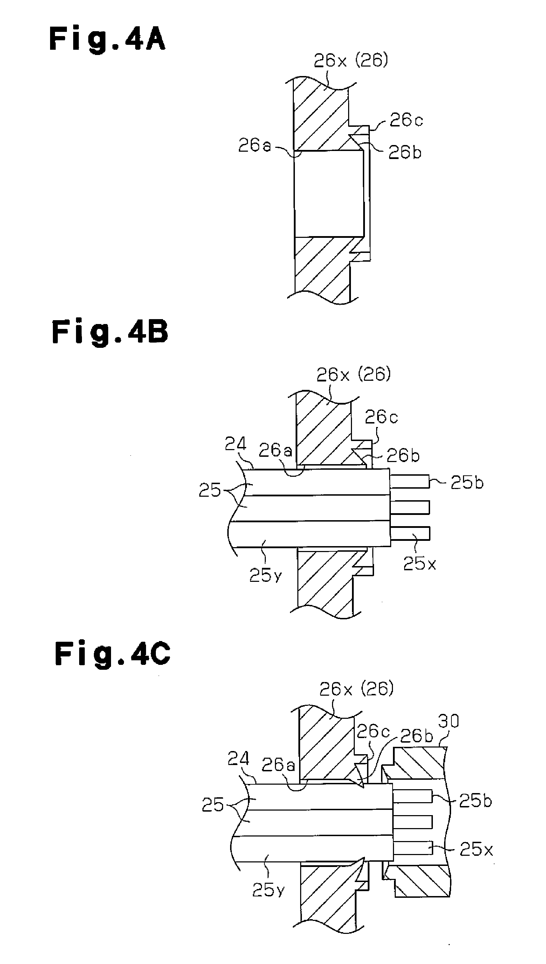

The fastening of the bristle bundles 24 to the fastening portion 26x will now be described with reference to Figs. 4A, 4B, and 4C. Fig. 4A shows the fastening portion 26x prior to the insertion of a bristle bundle 24. As shown in Fig. 4B, the basal portions 25b of the bristle bundle 24 (bristles 25) are inserted through the insertion hole 26a so as to be located at the rear side of the fastening portion 26x. Then, as shown in Fig. 4C, a welding jig 30 for ultrasonic welding is arranged in contact with the welding piece 26b and the peripheral wall 26c. The welding jig 30 is driven to fuse the welding piece 26b so that the welding piece 26b gets caught in the side surface of the bristle bundle 24. This couples the welding piece 26b with the bristle bundle 24 and fastens the bristle bundle 24 to the fastening portion 26x. In the illustrated example, the welding piece 26b is an annular piece surrounding the side surface of the bristle bundle 24. When welded, the annular piece is reduced in diameter so as to shrink inward in the radial direction.

The connection portion 26y includes a connection recesses 26d, which include openings facing toward the front side of the brush body 21. The basal portions 25b of the bristle bundles 24 (bristles 25) are accommodated in the connection recesses 26d. The cores 25x, which project at the basal portions 25b, are in contact with or pressed against the inner walls of the connections recesses 26d for electric connection. The connection portion 26y is connected to the connection terminal 27. The connection portion 26y may be fastened to the fastening portion 26x by an adhesive or the like. By filling the connection recesses 26d with a conductive adhesive, the fastening of the connection portion 26y with the fastening portion 26x and the connection of the cores 25x of the bristles 25 with the connection portion 26y are further ensured.

In this manner, the base 26 is formed by the fastening portion 26x and the connection portion 26y, which are separated in accordance with function. Thus, a material that is suitable for the function can be selected, and the fastening and electric connection of the bristle bundles 24 may be further ensured. Further, the ultrasonic welding process facilitates fusing of the welding pieces 26b. In particular, when the welding pieces 26b of the base 26 and the sheaths 25y of the bristle bundle 24 are all formed from resins, the ultrasonic welding is effective for joining the base 26 and the bristle bundles 24. Further, the peripheral wall 26c surrounding each welding piece 26b can prevent the outflow of fused material (prevent the fastening strength from decreasing) and be used to position the welding jig 30.

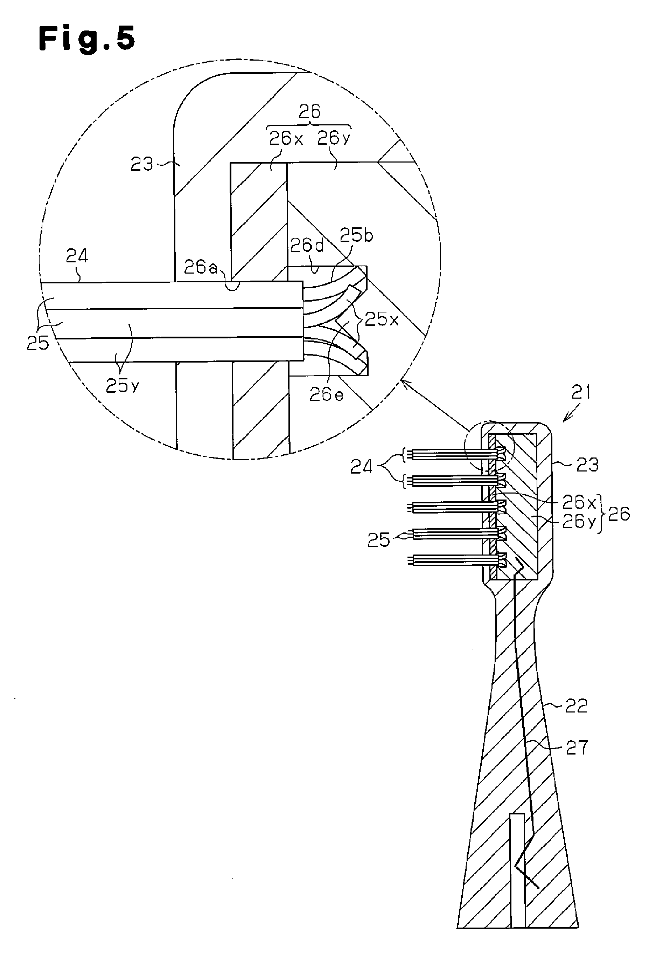

As shown in Fig. 5, a conical pressing protrusion 26e may be arranged in the connection recess 26d of the connection portion 26y, for example, at the center of the bottom surface of the connection recess 26d. In this case, the cores 25x at the basal portions 25b of the bristles 25 are pressed by the pressing protrusion 26e or bent by the pressing protrusion 26e and thereby pressed against the inner surface of the connection recess 26d. This further ensures electric connection of the cores 25x of the bristles 25 with the connection portion 26y.

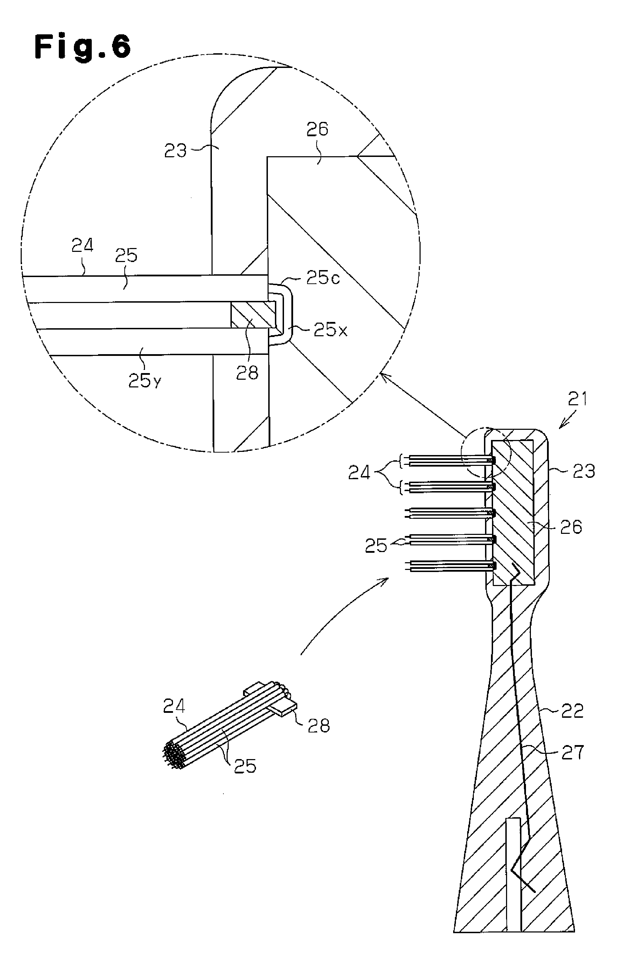

The basal portions 25b of the bristle bundles 24 (bristles 25) do not necessarily have to be embedded in the brush head 23. For example, like in the known process shown in Fig. 6, each bristle bundle 24 may be folded in a U-shaped manner so as to sandwich a holding plate 28, and the folded portion may be embedded in the brush head 23. At a middle folding portion 25c of each bristle 25, the folded core 25x can be exposed to electrically connect the core 25x of the bristle 25 with the base 26. In this manner, a slight change in the known embedding process facilitates the electric connection of the cores 25x of the bristles 25 with the base 26.

In the above embodiment, saliva is illustrated as one example of oral cavity fluid. However, the oral cavity fluid may be a solution other than saliva such as a solution including chloride ions or an oral cavity care solution. In a non-restrictive example, the electrode may generate chlorine, which has a sterilization effect through electrolysis of the oral cavity fluid near the electrode and .

In the toothbrush 10 of the above embodiment, the brush body 21 is supported so that it can be attached in a removable manner to the grip 11. However, the brush body 21 may be formed integrally with the grip 11. The oscillation actuator 13 may be eliminated.

In the above embodiment, the bristle bundles 24 do not necessarily have to be embedded (fastened and electrically connected) in the conductive base 26. For example, the bristle bundles 24 may be embedded in the brush head 23, and the cores 25x of the bristles 25 may all be electrically connected directly or indirectly to the connection terminal 27 by a conductive adhesive or a conductive fused resin. The conductive adhesive or conductive fused resin is subsequently hardened. In a further example, one end of the connection terminal 27 (conductive metal member) is extended so that the cores 25x of the bristles 25 can all be electrically connected directly to the connection terminal.

A technical concept that can be acknowledged from this modified example will now be described.
(a) A brush body including a plurality of bristle bundles embedded in a brush head and including an electrode that generates chlorine, which has a sterilization effect, from chloride ions in an oral cavity fluid through electrolysis, the brush body being characterized in that:
   at least some of the bristle bundles or at least some of a plurality of bristles in the bristle bundles are formed by a bristle that covers a core, which is formed by a conductive member, with a sheath, which is formed by an insulative member, and exposes the core at a tip portion; and
   in the bristle bundles embedded in the brush head, the cores of the bristles are all electrically connected by a conductive adhesive, a conductive fused resin, or a conductive metal member.

Such a structure facilitates the electric connection of the cores (electrodes) of the bristles with a conductive adhesive, a conductive fused resin, or a conductive metal member. Further, the conductive adhesive, conductive fused resin, or conductive metal member facilitates connection to an electric circuit.

### DESCRIPTION OF THE REFERENCE CHARACTERS

10: toothbrush, 13: oscillation actuator, 15: control circuit (energizing means), 21: brush body, 23: brush head (insulative member), 24: bristle bundle, 25: bristle, 25a: tip portion, 25c: folded portion, 25x: core (electrode, energizing means), 25y: sheath, 26: base (conductive member, conductive elastic member), 26b: welding piece, 26c: peripheral wall, 26x: fastening basal portion, 26y: connection basal portion.

## Claims

1. A brush body including a plurality of bristle bundles on a brush head, the brush body being **characterized in that**:
the plurality of bristle bundles includes a bristle that includes a core, which is formed by a conductive member, and a sheath, which covers the core and is formed by an insulative member, wherein the core is exposed from the sheath at a tip portion of the bristle to function as an electrode that energizes an oral cavity; and
the bristle bundles are embedded in a base, which is arranged in the brush head and formed by a conductive member, thereby electrically connecting the core to the base.

2. The brush body according to claim 1, **characterized in that** the base is arranged in the brush head and thereby covered by the insulative member.

3. The brush body according to claim 1 or 2, **characterized in that** the base is formed by a conductive elastic member.

4. The brush body according to any one of claims 1 to 3, **characterized in that** the base is formed to press against a connection portion of the core in a state in which the bristle bundles are embedded.

5. The brush body according to any one of claims 1 to 4, **characterized in that** the base is an assembly including a fastening portion, which fastens the bristle bundles, and a connection portion, which is electrically connected to the core.

6. The brush body according to claim 5, **characterized in that**:
the bristle bundle is fastened by ultrasonic welding to the fastening portion; and
the fastening portion includes a welding piece, which is used for ultrasonic welding, and a peripheral wall, which surrounds the welding piece.

7. The brush body according to claim 6, **characterized in that**:
the sheath is formed from an insulative resin and defines a side surface of the bristle bundle; and
the welding piece of the fastening portion is welded to the sheath.

8. The brush body according to claim 7, **characterized in that**:
the sheath is formed from an insulative resin and defines a side surface of the bristle bundle; and
the welding piece of the fastening portion is an annular piece surrounding the side surface of the bristle bundle.

9. The brush body according to claim 1, **characterized in that** each of a plurality of bristles forming each of the bristle bundles includes the core and the sheath.

10. The brush body according to claim 1, **characterized in that** each of the bristles in selected ones of the bristle bundles includes the core and the sheath.

11. The brush body according to any one of claims 1 to 10, **characterized in that** the bristle bundle is folded in a U-shaped manner to include a folding portion, and the core is exposed from the sheath at the folded portion and electrically connected to the base.

12. The brush body according to any one of claims 1 to 10, **characterized in that**:
the core includes a distal projection, which functions as the electrode, and a basal projection, which is connected to the base; and
the sheath covers a side surface of the core excluding a side surface of the distal projection and side surface of the basal projection in the core.

13. The brush body according to any one of claims 1 to 12, **characterized in that** the electrode generates chlorine having a sterilization effect through electrolysis of oral cavity fluid that is proximal to the electrode.

14. A toothbrush comprising:
the brush body according to any one of claims 1 to 13; and
an energizing means for supplying the electrode of the bristle with current for local energizing.

15. The toothbrush according to claim 14, further **characterized by** an oscillation actuator that oscillates the brush head.
